(19) Europäisches Patentamt / European Patent Office / Office européen des brevets

(11) **EP 2 407 364 B1**

(12) **EUROPÄISCHE PATENTSCHRIFT**

(45) Veröffentlichungstag und Bekanntmachung des Hinweises auf die Patenterteilung:
**25.11.2020   Patentblatt 2020/48**

(21) Anmeldenummer: **11002489.0**

(22) Anmeldetag: **25.03.2011**

(51) Int Cl.:
**B60W 40/06** *(2012.01)*          **B60W 40/112** *(2012.01)*
**B60W 40/109** *(2012.01)*        B60W 10/20 *(2006.01)*
B60W 30/12 *(2020.01)*        B60W 50/00 *(2006.01)*

(54) **Verfahren und Vorrichtung zum Erkennen und Kompensieren einer von einem Fahrzeug durchfahrenen Fahrbahnquerneigung**

Method and device for recognising and compensating for a vehicle being angled across a roadway

Procédé et dispositif de reconnaissance et de compensation d'une inclinaison de la chaussée parcourue par un véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2010   DE 102010026916**

(43) Veröffentlichungstag der Anmeldung:
**18.01.2012   Patentblatt 2012/03**

(73) Patentinhaber: **MAN Truck & Bus SE**
**80995 München (DE)**

(72) Erfinder:
• **Schwertberger, Walter**
**82278 Althegnenberg (DE)**
• **Brummer, Markus**
**85301 Schweitenkirchen (DE)**
• **Heyes, Daniel**
**81247 München (DE)**
• **Resch, Christoph**
**80637 München (DE)**
• **Rosinger, Walter**
**8010 Graz (AT)**

(74) Vertreter: **v. Bezold & Partner Patentanwälte - PartG mbB**
**Akademiestraße 7**
**80799 München (DE)**

(56) Entgegenhaltungen:
**DE-A1- 19 615 311        DE-A1-102006 053 102**
**DE-C1- 19 821 617**

**Beschreibung**

Die vorliegende Erfindung betrifft ein Verfahren zum Erkennen und Kompensieren einer von einem Fahrzeug durchfahrenen Fahrbahnquerneigung, wobei die Fahrbahnquerneigung anhand einer durch die Fahrbahnquerneigung erzeugten Querbeschleunigung des Fahrzeugs erkannt und kompensiert wird, sowie eine Vorrichtung zum Erkennen und Kompensieren einer von einem Fahrzeug durchfahrenen Fahrbahnquerneigung, wobei die Fahrbahnquerneigung anhand einer durch die Fahrbahnquerneigung erzeugten Querbeschleunigung des Fahrzeugs erkannt und kompensiert wird.

Stand der Technik

Im Bereich Fahrerassistenzsysteme für Straßenfahrzeuge sind Systeme bekannt, die ein Fahrzeug durch kontinuierliche Lenkeingriffe innerhalb des Fahrstreifens halten. Solche Systeme dienen in der Regel dazu, Unfälle durch unbeabsichtigtes Verlassen des eigenen Fahrstreifens zu verhindern. Im Rahmen der Regelung des Fahrzeugverhaltens kommt hierbei der Querbeschleunigung als Messgröße eine große Bedeutung zu.

Im Normalfall wird die Querbeschleunigung mittels eines Querbeschleunigungssensors gemessen. Diese Messung der Querbeschleunigung findet in einem Inertialsystem statt. Somit gehen in den Wert der gemessenen Querbeschleunigung neben den Querkräften, die am Fahrzeug aufgrund der Fahrzeugbewegung angreifen, auch die Kräfte ein, die durch eine quergeneigte Fahrbahn verursacht werden. Dagegen liegen Regelverfahren zur Berechnung von benötigten Größen für gewöhnlich fahrbahnfeste Koordinatensysteme zugrunde. Solche fahrbahnfesten Koordinatensysteme haben die Eigenschaft, dass in ihnen die Fahrbahn keine Querneigung aufweist, und die darin verwendete Querbeschleunigung folglich auch keine Anteile aufweist, die durch eine Querneigung der Fahrbahn hervorgerufen werden.

Aufgrund dieser Situation - gemessene Querbeschleunigung in einem Inertialsystem und benötigte Querbeschleunigung in einem fahrbahnfesten Koordinatensystem muss eine Transformation der im Inertialsystem gemessenen Querbeschleunigung in das fahrbahnfeste Koordinatensystem erfolgen.

Entsprechend der DE 198 21 618 wird ein Verfahren und eine Vorrichtung zur Regelung einer die Fahrzeugbewegung repräsentierenden Bewegungsgröße vorgesehen, durch welche die Transformation der im Inertialsystem gemessenen Querbeschleunigung in das fahrbahnfeste Koordinatensystem ermöglicht wird. Ein solches Verfahren, in welchem eine Transformation der im Inertialsystem gemessenen Querbeschleunigung in das fahrbahnfeste Koordinatensystem durchgeführt wird, ist jedoch kompliziert und erfordert zudem eine Vorrichtung, welche geeignet ist, diese Umrechnung vorzunehmen.

Die DE 196 15 311 A1 offenbart eine Vorrichtung bzw. ein Verfahren zur Regelung einer die Fahrzeugbewegung repräsentierenden Bewegungsgröße, welche Mittel zur Bestimmung der Gierrate des Fahrzeuges, zur Bestimmung der Längsgeschwindigkeit des Fahrzeuges und zur Bestimmung der Querbeschleunigung des Fahrzeuges enthält. Des Weiteren enthält die Vorrichtung Mittel zur Beeinflussung des Vortriebsmomentes und/oder des Bremsmomentes einzelner Räder des Fahrzeuges. Die Vorrichtung enthält weiter Mittel zur Bestimmung einer von der Fahrbahnquerneigung abhängigen Querbeschleunigungskomponente, sowie Mittel zur Korrektur der Querbeschleunigung des Fahrzeuges wenigstens in Abhängigkeit der von der Fahrbahnquerneigung abhängigen Querbeschleunigungskomponente. Die Bestimmung der von der Fahrbahnquerneigung abhängigen Querbeschleunigungskomponente und auch die Korrektur der Querbeschleunigung des Fahrzeuges wird in einem durch die Gierrate und die Querbeschleunigung beschriebenen stabilen Zustand des Fahrzeuges vorgenommen.

Die DE 198 21 617 C1 offenbart ein Verfahren und eine Vorrichtung zur Messung des Neigungswinkels in seitlich geneigten Kurven und deren Verwendung. Das Verfahren bzw. die Vorrichtung soll es ermöglichen, den Neigungswinkel mit bereits vorhandenen Sensoren zu erfassen. Bei diesem Verfahren bzw. dieser Vorrichtung wird aus der Drehrate, der Querbeschleunigung und der Fahrzeuggeschwindigkeit der Neigungswinkel der Kurve berechnet. Dieses Verfahren bzw. die Vorrichtung eignet sich für fahrdynamische Stabilitätsregelungen, die ohne zusätzliche Sensoren den Neigungswinkel einer seitlich geneigten Kurve messen und diesen in ihre Berechnungen mit einbeziehen.

Die DE 10 2006 053 102 A1 offenbart ein Verfahren zum Verbessern des Lenkkomforts bei Querfahrten auf geneigten Flächen. Um dem Fahrer das Lenken auf geneigten Flächen zu erleichtern, wird vorgeschlagen, mittels einer Sensorik das Fahren auf einer Neigung zu erkennen und, wenn dieser Zustand erkannt wurde, einen Aktuator eines Fahrzeugsystems zu betätigen, so dass das am Lenkrad auszuübende Lenkmoment reduziert wird. Die Unterstützung des Fahrzeugs beim Fahren quer zu einer Neigung wird dann aktiviert, wenn das Fahrzeug sich in Geradeausfahrt befindet.

Aufgabe der vorliegenden Erfindung ist es, ein Verfahren und eine Vorrichtung zum Erkennen und Kompensieren einer von einem Fahrzeug durchfahrenen Fahrbahnquerneigung zu schaffen, welche eine vereinfachte Regelung ermöglicht.

Diese Aufgabe wird in Verfahrenshinsicht durch die Merkmale des Patentanspruchs 1 sowie in Vorrichtungshinsicht durch die Merkmale des Patentanspruchs 4 gelöst.

Offenbarung der Erfindung

Entsprechend der bevorzugten Ausführungsform der vorliegenden Erfindung wird ein Verfahren zum Erkennen einer von einem Fahrzeug durchfahrenen Fahrbahnquerneigung vorgesehen, wobei die Fahrbahnquerneigung anhand einer durch die Fahrbahnquerneigung erzeugten Querbeschleunigung des Fahrzeugs erkannt wird.

Entsprechend dem Verfahren erfolgt vorzugsweise ein Messen einer Querbeschleunigung des Fahrzeugs durch eine Messvorrichtung. Des Weiteren kann eine durch Fahrmanöver erzeugte Querbeschleunigung des Fahrzeugs durch einen Querneigungsbeobachter bestimmt werden. Die durch die Fahrbahnquerneigung aufgebrachte Querbeschleunigung des Fahrzeugs kann anschließend durch den Querneigungsbeobachter bestimmt werden, indem eine Differenz der durch Fahrmanöver erzeugten Querbeschleunigung des Fahrzeugs und der durch die Messvorrichtung gemessenen Querbeschleunigung des Fahrzeugs bestimmt wird.

Aufgrund dessen, dass eine Differenz zwischen der durch Fahrmanöver erzeugten Querbeschleunigung des Fahrzeugs und der durch die Messvorrichtung gemessenen Querbeschleunigung des Fahrzeugs zur Bestimmung der durch die Fahrbahnquerneigung erzeugten Querbeschleunigung des Fahrzeugs gebildet wird, ist der Anteil der durch die Fahrbahnquerneigung erzeugten Querbeschleunigung des Fahrzeugs an der durch die Messvorrichtung gemessenen Querbeschleunigung des Fahrzeugs bekannt. Somit besteht nicht das Erfordernis, eine Transformation des Wertes der durch die Fahrbahnquerneigung erzeugten Querbeschleunigung des Fahrzeugs eine Transformation von beispielsweise einer in einem Inertialsystem gemessenen Querbeschleunigung in ein fahrbahnfestes Koordinatensystem durchzuführen.

Des Weiteren besteht die Möglichkeit einer einfachen Integration der Erkennung der von einem Fahrzeug durchfahrenen Fahrbahnquerneigung in ein bestehendes Querregelverfahren, welches das Fahrzeug durch kontinuierliche Lenkeingriffe innerhalb eines Fahrstreifens hält. Ein bestehender Querführungsregler kann dadurch von der Erkennung der Fahrbahnneigung entlastet werden. Die durch Fahrmanöver erzeugte Querbeschleunigung des Fahrzeugs wird vorzugsweise aus einer Korrelation der durch Fahrmanöver erzeugten Querbeschleunigung des Fahrzeugs mit einer Gierrate und einer Fahrgeschwindigkeit des Fahrzeugs bestimmt.

Entsprechend der bevorzugten Ausführungsform der vorliegenden Erfindung wird des Weiteren ein Verfahren zum Kompensieren einer von einem Fahrzeug durchfahrenen Fahrbahnquerneigung vorgesehen. Das Verfahren weist ein Stellen eines Lenkwinkels auf, welcher eine durch die Fahrbahnquerneigung aufgebrachte Querbeschleunigung des Fahrzeugs kompensiert. Das Stellen des Lenkwinkels erfolgt hierbei durch einen Querneigungskompensator, der auf der Grundlage der durch das Verfahren zum Bestimmen der von dem Fahrzeug durchfahrenen Fahrbahnquerneigung bestimmten Störbeschleunigung, d.h. der durch die Fahrbahnquerneigung aufgebrachten Querbeschleunigung des Fahrzeugs, den Kompensationswinkel berechnet. Somit besteht die Möglichkeit einer einfachen Integration der Kompensation der von einem Fahrzeug durchfahrenen Fahrbahnquerneigung in ein bestehendes Querregelverfahren, welches das Fahrzeug durch kontinuierliche Lenkeingriffe innerhalb eines Fahrstreifens hält. Ein bestehender Querführungsregler kann dadurch von der Ausregelung der Fahrbahnneigung entlastet und es kann eine schnelle Kompensation der Fahrbahnneigung erreicht werden. Der die Fahrbahnquerneigung kompensierende Lenkwinkel des Fahrzeugs kann aus einer Korrelation des kompensierenden Lenkwinkels des Fahrzeugs mit einer fahrzeugabhängigen Konstante und der durch die Fahrbahnquerneigung aufgebrachten Querbeschleunigung des Fahrzeugs bestimmt werden.

Entsprechend der bevorzugten Ausführungsform der vorliegenden Erfindung wird des Weiteren eine Vorrichtung zum Erkennen einer von einem Fahrzeug durchfahrenen Fahrbahnquerneigung vorgesehen, wobei die Fahrbahnquerneigung anhand einer durch die Fahrbahnquerneigung erzeugten Querbeschleunigung des Fahrzeugs erkannt wird. Die Vorrichtung zum Erkennen einer von einem Fahrzeug durchfahrenen Fahrbahnquerneigung weist vorzugsweise eine Messvorrichtung, welche geeignet ist, einer Querbeschleunigung des Fahrzeugs zu messen, und einen Querneigungsbeobachter auf, welcher geeignet ist, eine durch Fahrmanöver erzeugte Querbeschleunigung des Fahrzeugs zu bestimmen. Der Querneigungsbeobachter ist vorzugsweise ferner geeignet, eine durch die Fahrbahnquerneigung aufgebrachte Querbeschleunigung des Fahrzeugs zu bestimmen, indem eine Differenz der durch Fahrmanöver erzeugten Querbeschleunigung des Fahrzeugs und der durch die Messvorrichtung gemessenen Querbeschleunigung des Fahrzeugs bestimmt wird.

Der Querneigungsbeobachter ist vorzugweise geeignet, die durch Fahrmanöver erzeugte Querbeschleunigung des Fahrzeugs aus einer Korrelation der durch Fahrmanöver erzeugten Querbeschleunigung des Fahrzeugs mit einer Gierrate und einer Fahrgeschwindigkeit des Fahrzeugs zu bestimmen.

Entsprechend der bevorzugten Ausführungsform der vorliegenden Erfindung wird des Weiteren eine Vorrichtung zum Kompensieren einer von einem Fahrzeug durchfahrenen Fahrbahnquerneigung vorgesehen. Die Vorrichtung zum Kompensieren einer von einem Fahrzeug durchfahrenen Fahrbahnquerneigung weist vorzugsweise einen Querneigungskompensator auf, welcher geeignet ist, einen Lenkwinkel zu stellen, der eine durch die Fahrbahnquerneigung aufgebrachte Querbeschleunigung des Fahrzeugs kompensiert. Das Stellen des Lenkwinkels erfolgt hierbei auf der Grundlage der durch die Vorrichtung zum Bestimmen der von dem Fahrzeug durchfahrenen Fahrbahnquerneigung bestimmten, durch die Fahrbahnquerneigung aufgebrachten Querbeschleunigung des Fahrzeugs.

Der Querneigungskompensator ist vorzugsweise ferner geeignet, den die Fahrbahnquerneigung kompensierenden Lenkwinkel des Fahrzeugs aus einer Korrelation des kompensierenden Lenkwinkels des Fahrzeugs mit einer fahrzeugabhängigen Konstante und der durch die Fahrbahnquerneigung aufgebrachten Querbeschleunigung des Fahrzeugs zu bestimmen.

Kurze Beschreibung der Zeichnungen

Ausführungsbeispiele, aus denen sich weitere erfinderische Merkmale ergeben können, auf die die Erfindung aber in Ihrem Umfang nicht beschränkt ist, sind in den Zeichnungen dargestellt. Es zeigen:

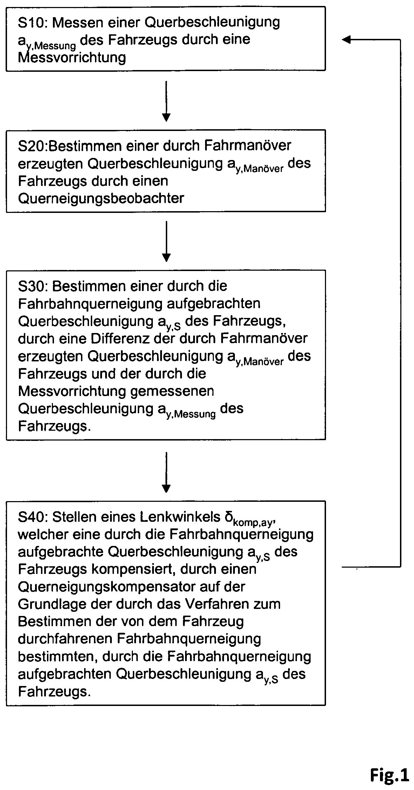

Fig. 1 ein Ablaufdiagramm eines Verfahrens zum Erkennen und Kompensieren einer von einem Fahrzeug durchfahrenen Fahrbahnquerneigung entsprechend einer Ausführungsform der vorliegenden Erfindung;

Fig, 2 ein Diagramm einer Vorrichtung zum Erkennen und Kompensieren einer von einem Fahrzeug durchfahrenen Fahrbahnquerneigung entsprechend einer Ausführungsform der vorliegenden Erfindung, sowie eines bestehenden Querregelsystems.

Ausführungsform der Erfindung

Fig. 1 zeigt ein Ablaufdiagramm eines erfindungsgemäßen Verfahrens zum Erkennen und Kompensieren einer von einem Fahrzeug durchfahrenen Fahrbahnquerneigung. In Schritt S10 erfolgt ein Messen einer Querbeschleunigung $a_{y,Messung}$ des Fahrzeugs durch eine Messvorrichtung.

In Schritt S20 wird ein Bestimmen einer durch Fahrmanöver erzeugten Querbeschleunigung $a_{y,Manöver}$ des Fahrzeugs durch einen Querneigungsbeobachter 10 durchgeführt.

In Schritt S30 erfolgt ein Bestimmen einer durch die Fahrbahnquerneigung aufgebrachten Querbeschleunigung $a_{y,s}$ des Fahrzeugs, durch eine Differenz der durch Fahrmanöver erzeugten Querbeschleunigung $a_{y,Manöver}$ des Fahrzeugs und der durch die Messvorrichtung gemessenen Querbeschleunigung $a_{y,Messung}$ des Fahrzeugs.

In Schritt S40 wird ein Stellen eines Lenkwinkels $\delta_{komp,ay}$ durchgeführt, welcher eine durch die Fahrbahnquerneigung aufgebrachte Querbeschleunigung $a_{y,s}$ des Fahrzeugs kompensiert, durch den Querneigungskompensator 11. Das Stellen des Lenkwinkels erfolgt hierbei auf der Grundlage der durch das Verfahren zum Bestimmen der von dem Fahrzeug durchfahrenen Fahrbahnquerneigung bestimmten, durch die Fahrbahnquerneigung aufgebrachten Querbeschleunigung $a_{y,s}$ des Fahrzeugs. Anschließend begibt sich das Verfahren zurück zu Schritt S10.

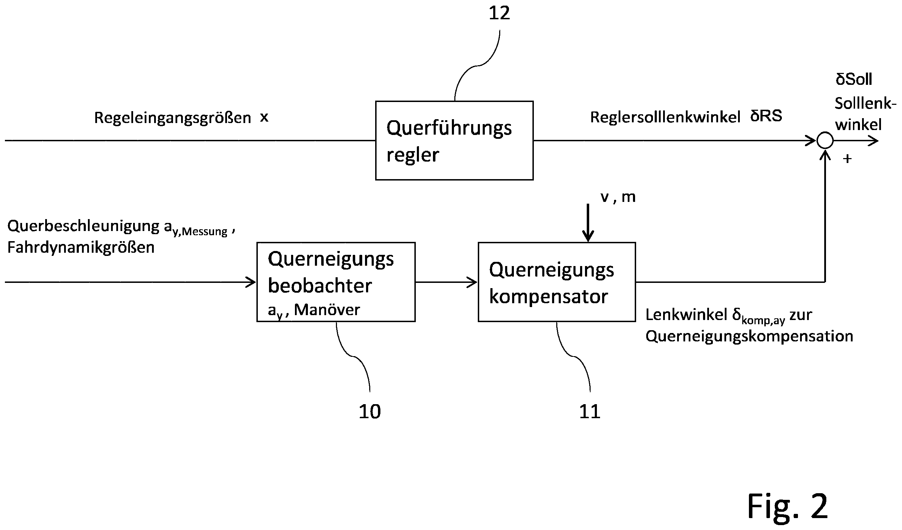

Fig. 2 zeigt ein Diagramm einer Vorrichtung zum Erkennen und Kompensieren einer von einem Fahrzeug durchfahrenen Fahrbahnquerneigung entsprechend einer Ausführungsform der vorliegenden Erfindung, sowie eines bestehenden Querregelsystems. Die Vorrichtung zum Erkennen und Kompensieren einer von einem Fahrzeug durchfahrenen Fahrbahnquerneigung weist den Querneigungsbeobachter 10 und den Querneigungskompensator 11 sowie das bestehende Querregelsystem einen Querführungsregler 12 auf.

Der Querneigungsbeobachter 10 weist als Eingangsgrößen die durch eine Messvorrichtung gemessene Querbeschleunigung $a_{y,Messung}$ des Fahrzeugs, sowie eine Gierrate $\psi$ und einer Fahrgeschwindigkeit v des Fahrzeugs auf.

Der Querneigungsbeobachter 10 analysiert die Querbeschleunigung des Fahrzeugs um auf die Fahrbahnquerneigung zu schließen. Dabei wird die durch Fahrmanöver erzeugte Querbeschleunigung $a_{y,Manöver}$ des Fahrzeugs bestimmt, wobei die durch Fahrmanöver erzeugte Querbeschleunigung $a_{y,Manöver}$ des Fahrzeugs über eine Korrelation der Gierrate $\psi$ und der Fahrgeschwindigkeit v des Fahrzeugs bestimmt wird.

$$a_{y,Manöver} = \psi v \qquad\qquad\qquad (1)$$

Alternativ kann die durch Fahrmanöver erzeugte Querbeschleunigung $a_{y,Manöver}$ des Fahrzeugs auch über andere fahrdynamische Zusammenhänge von Lenk- oder Gierbewegungen und der Querbeschleunigung $a_{y,Manöver}$ des Fahrzeugs bestimmt werden.

Die durch externe Kräfte erzeugte Störbebeschleunigung, d.h. die durch die Fahrbahnquerneigung aufgebrachte Querbeschleunigung $a_{y,s}$ des Fahrzeugs wird anschließend durch den Querneigungsbeobachter 10 als Differenz von der durch Fahrmanöver erzeugten Querbeschleunigung $a_{y,Manöver}$ des Fahrzeugs und der von der Messvorrichtung gemessenen Querbeschleunigung $a_{y,Messung}$ des Fahrzeugs über

$$a_{y,S} = a_{y,\text{Manöver}} - a_{y,\text{Messung}} \qquad (2)$$

bestimmt. Der Querneigungsbeobachter 10 weist als Ausgangsgröße somit die durch die Fahrbahnquerneigung aufgebrachte Querbeschleunigung $a_{y,s}$ des Fahrzeugs auf.

Der Querneigungskompensator 11 weist als Eingangsgröße die von dem Querneigungsbeobachter 10 bestimmte, durch die Fahrbahnquerneigung aufgebrachte Querbeschleunigung $a_{y,s}$ des Fahrzeugs auf. Der Querneigungskompensator 11 weist die Aufgabe auf, die durch die Fahrbahnquerneigung aufgebrachte Querbeschleunigung $a_{y,s}$ des Fahrzeugs durch Stellen eines Lenkwinkels in Gegenrichtung der Fahrbahnquerneigung zu kompensieren. Dazu wird ein Fahrdynamikmodell invertiert und aus der durch die Fahrbahnquerneigung aufgebrachte Querbeschleunigung $a_{y,s}$ des Fahrzeugs der notwendige kompensierende Lenkwinkel $\delta_{\text{komp,ay}}$ bestimmt.

Im Rahmen der Ausführungsform der vorliegenden Erfindung wird hierzu ein stationäres Einspurmodell invertiert. Dadurch lässt sich der notwendige kompensierende Lenkwinkel $\delta_{\text{komp,ay}}$ proportional zu einer fahrzeugabhängigen Konstante k über den Zusammenhang

$$\delta_{\text{komp,ay}} = k\, a_{y,S} \qquad (3)$$

bestimmen. Die Konstante K ist geschwindigkeits- und beladungsabhängig implementiert und somit eine Funktion der Fahrzeuggeschwindigkeit v und der Fahrzeugmasse m. Der Querneigungskompensator 11 weist als Ausgangsgröße somit den kompensierenden Lenkwinkel $\delta_{\text{komp,ay}}$ auf.

Der Querführungsregler 12 des bestehenden Querführungssystems weist als Eingangsgröße zumindest eine Regelgröße x auf. Erfolgt ein Abweichen des Fahrzeugs von einem vorgegebenen Fahrstreifen, so wird durch den Querführungsregler 12 ein Reglersolllenkwinkel $\delta_{\text{RS}}$ bestimmt, der die Ausgangsgröße des Querführungsreglers 12 bildet. Die Ausgangsgröße $\delta_{\text{RS}}$ des Querführungsreglers 12 und die Ausgangsgröße $\delta_{\text{komp,ay}}$ des Querneigungskompensators 11 werden anschließend addiert und bilden einen Solllenkwinkel $\delta_{\text{Soll}}$, welcher mittels eines Lenkeingriffs die durch den Querneigungsbeobachter 10 bestimmten Störbeschleunigung des Fahrzeugs sowie die durch den Querführungsregeler 12 bestimmten Regelabweichungen in der Fahrzeugführung kompensiert.

Die Erfindung wurde anhand konkreter Ausgestaltungen der Erfindung näher erläutert, ohne auf die konkrete Ausführungsform begrenzt zu sein.

**Patentansprüche**

1. Verfahren zum Erkennen und Kompensieren einer von einem Fahrzeug durchfahrenen Fahrbahnquerneigung, wobei die Fahrbahnquerneigung anhand einer durch die Fahrbahnquerneigung erzeugten Querbeschleunigung ($a_{y,S}$) des Fahrzeugs erkannt wird, aufweisend:

   Messen (S10) einer Querbeschleunigung ($a_{y,\text{Messung}}$) des Fahrzeugs durch eine Messvorrichtung;
   Bestimmen (S20) einer durch Fahrmanöver erzeugten Querbeschleunigung ($a_{y,\text{Manöver}}$) des Fahrzeugs durch einen Querneigungsbeobachter (10);
   Bestimmen (S30) einer durch die Fahrbahnquerneigung aufgebrachten Querbeschleunigung ($a_{y,S}$) des Fahrzeugs, wobei die durch die Fahrbahnquerneigung aufgebrachte Querbeschleunigung ($a_{y,S}$) des Fahrzeugs einer Differenz der durch Fahrmanöver erzeugten Querbeschleunigung ($a_{y,\text{Manöver}}$) des Fahrzeugs und der durch die Messvorrichtung gemessenen Querbeschleunigung ($a_{y,\text{Messung}}$) des Fahrzeugs entspricht,
   Stellen (S40) eines die Fahrbahnquerneigung kompensierenden Lenkwinkels ($\delta_{\text{komp,ay}}$), welcher die durch die Fahrbahnquerneigung aufgebrachte Querbeschleunigung ($a_{y,S}$) des Fahrzeugs kompensiert, durch einen Querneigungskompensator (11) auf der Grundlage der bestimmten, durch die Fahrbahnquerneigung aufgebrachten Querbeschleunigung ($a_{y,S}$) des Fahrzeugs,
   wobei der die Fahrbahnquerneigung kompensierende Lenkwinkel ($\delta_{\text{komp,ay}}$) des Fahrzeugs aus einer Korrelation des kompensierenden Lenkwinkels ($\delta_{\text{komp,ay}}$) des Fahrzeugs mit einer fahrzeugabhängigen Konstante (k) und der durch die Fahrbahnquerneigung aufgebrachten Querbeschleunigung ($a_{y,S}$) des Fahrzeugs bestimmt wird; und
   die Konstante (k) geschwindigkeits- und beladungsabhängig implementiert und somit eine Funktion der Fahrzeuggeschwindigkeit (v) und der Fahrzeugmasse (m) ist.

2. Verfahren nach Anspruch 1, **dadurch gekennzeichnet, dass** die durch Fahrmanöver erzeugte Querbeschleunigung

($a_{y,Manöver}$) des Fahrzeugs aus einer Korrelation der durch Fahrmanöver erzeugten Querbeschleunigung ($a_{y,Manöver}$) des Fahrzeugs mit einer Gierrate ($\psi$) und einer Fahrgeschwindigkeit (v) des Fahrzeugs bestimmt wird.

3. Vorrichtung zum Erkennen und zum Kompensieren einer von einem Fahrzeug durchfahrenen Fahrbahnquerneigung, wobei die Fahrbahnquerneigung anhand einer durch die Fahrbahnquerneigung erzeugten Querbeschleunigung ($a_{y,S}$) des Fahrzeugs erkannt wird, aufweisend:

eine Messvorrichtung, welche geeignet ist, einer Querbeschleunigung ($a_{y,Messung}$) des Fahrzeugs zu messen, und

einen Querneigungsbeobachter (10), welcher geeignet ist, eine durch Fahrmanöver erzeugte Querbeschleunigung ($a_{y,Manöver}$) des Fahrzeugs zu bestimmen,

wobei der Querneigungsbeobachter (10) geeignet ist, eine durch die Fahrbahnquerneigung aufgebrachte Querbeschleunigung ($a_{y,S}$) des Fahrzeugs zu bestimmen, indem eine Differenz der durch Fahrmanöver erzeugten Querbeschleunigung ($a_{y,Manöver}$) des Fahrzeugs und der durch die Messvorrichtung gemessenen Querbeschleunigung ($a_{y,Messung}$) des Fahrzeugs bestimmt wird,

einen Querneigungskompensator (11), welcher geeignet ist, einen die Fahrbahnquerneigung kompensierenden Lenkwinkel ($\delta_{komp,ay}$) zu stellen, der eine durch die Fahrbahnquerneigung aufgebrachte Querbeschleunigung ($a_{y,S}$) des Fahrzeugs kompensiert, auf der Grundlage der bestimmten, durch die Fahrbahnquerneigung aufgebrachten Querbeschleunigung ($a_{y,S}$) des Fahrzeugs,

wobei der Querneigungskompensator (11) geeignet ist, den die Fahrbahnquerneigung kompensierenden Lenkwinkel ($\delta_{komp,ay}$) des Fahrzeugs aus einer Korrelation des kompensierenden Lenkwinkels $\delta_{komp,ay}$ des Fahrzeugs mit einer fahrzeugabhängigen Konstante (k) und der durch die Fahrbahnquerneigung aufgebrachten Querbeschleunigung ($a_{y,S}$) des Fahrzeugs zu bestimmen; und

die Konstante (k) geschwindigkeits- und beladungsabhängig implementiert und somit eine Funktion der Fahrzeuggeschwindigkeit (v) und der Fahrzeugmasse (m) ist.

4. Vorrichtung nach Anspruch 3, **dadurch gekennzeichnet, dass** der Querneigungsbeobachter (10) geeignet ist, die durch Fahrmanöver erzeugte Querbeschleunigung ($a_{y,Manöver}$) des Fahrzeugs aus einer Korrelation der durch Fahrmanöver erzeugten Querbeschleunigung ($a_{y,Manöver}$) des Fahrzeugs mit einer Gierrate ($\psi$) und einer Fahrgeschwindigkeit (v) des Fahrzeugs zu bestimmen.


**Claims**

1. A method for detecting and compensating a transverse inclination of the roadway on which a vehicle is travelling, wherein the transverse inclination of the roadway is detected on the basis of a transverse acceleration ($a_{y,S}$) of the vehicle which is generated by the transverse inclination of the roadway, comprising:

measurement (S10) of a transverse acceleration ($a_{y,Meas}$) of the vehicle by a measuring device;

determination (S20) of a transverse acceleration ($a_{y,Manvr}$) of the vehicle which is generated by driving manoeuvres, by a transverse inclination observer (10) ;

determination (S30) of a transverse acceleration ($a_{y,S}$) of the vehicle which is applied by the transverse inclination of the roadway, wherein the transverse acceleration ($a_{y,S}$) of the vehicle applied by the transverse inclination of the roadway corresponds to a difference between the transverse acceleration ($a_{y,Manvr}$) of the vehicle which is generated by driving manoeuvres and the transverse acceleration ($a_{y,Meas}$) of the vehicle measured by the measuring device,

setting (S40) of a steering angle ($\delta_{comp,ay}$) which compensates the transverse inclination of the roadway and which compensates the transverse acceleration ($a_{y,S}$) of the vehicle applied by the transverse inclination of the roadway, by means of a transverse inclination compensator (11) on the basis of the determined transverse acceleration ($a_{y,S}$) of the vehicle applied by the transverse inclination of the roadway,

wherein the steering angle ($\delta_{comp,ay}$) of the vehicle which compensates the transverse inclination of the roadway is determined from a correlation of the compensating steering angle ($\delta_{comp,ay}$) of the vehicle with a vehicle-dependent constant (k) and the transverse acceleration ($a_{y,S}$) of the vehicle applied by the transverse inclination of the roadway; and

the constant (k) is implemented in a speed-dependent and load-dependent fashion and is therefore a function of the velocity (v) of the vehicle and of the vehicle mass (m).

2. The method according to Claim 1, **characterized in that** the transverse acceleration ($a_{y,Manvr}$) of the vehicle which is generated by driving manoeuvres is determined from a correlation of the transverse acceleration ($a_{y,Manvr}$) of the vehicle which is generated by driving manoeuvres with a yaw rate ($\psi$) and a velocity ($v$) of the vehicle.

3. A device for detecting and for compensating a transverse inclination of the roadway on which a vehicle is travelling, wherein the transverse inclination of a roadway is detected on the basis of a transverse acceleration ($a_{y,S}$) of the vehicle which is generated by the transverse inclination of the roadway, comprising:

a measuring device which is suitable for measuring transverse acceleration ($a_{y,Meas}$) of the vehicle, and
a transverse inclination observer (10) which is suitable for determining a transverse acceleration ($a_{y,Manvr}$) of the vehicle which is generated by driving manoeuvres,
wherein the transverse inclination observer (10) is suitable for determining a transverse acceleration ($a_{y,S}$) of the vehicle applied by the transverse inclination of the roadway, by determining a difference between the transverse acceleration ($a_{y,Manvr}$) of the vehicle which is generated by driving manoeuvres and the transverse acceleration ($a_{y,Meas}$) of the vehicle measured by the measuring device,
a transverse inclination compensator (11) which is suitable for setting a steering angle ($\delta_{comp,ay}$) which compensates the transverse inclination of the roadway and compensates a transverse acceleration ($a_{y,S}$) of the vehicle applied by the transverse inclination of the roadway, on the basis of the determined transverse acceleration ($a_{y,S}$) of the vehicle applied by the transverse inclination of the roadway,
wherein the transverse inclination compensator (11) is suitable for determining the steering angle ($\delta_{comp,ay}$) of the vehicle which compensates the transverse inclination of the roadway, from a correlation of the compensating steering angle ($\delta_{comp,ay}$) of the vehicle with a vehicle-dependent constant ($k$) and the transverse acceleration ($a_{y,S}$) of the vehicle applied by the transverse inclination of the roadway; and
the constant ($k$) is implemented in a speed-dependent and load-dependent fashion and is therefore a function of the velocity ($v$) of the vehicle and of the vehicle mass ($m$).

4. The device according to Claim 3, **characterized in that** the transverse inclination observer (10) is suitable for determining the transverse acceleration ($a_{y,Manvr}$) of the vehicle which is generated by driving manoeuvres, from a correlation of the transverse acceleration ($a_{y,Manvr}$) of the vehicle which is generated by driving manoeuvres, with a yaw rate ($\psi$) and a velocity ($v$) of the vehicle.


**Revendications**

1. Procédé de détection et de compensation d'une inclinaison transversale de voie roulement parcourue par un véhicule, l'inclinaison transversale de la voie étant détectée sur la base d'une accélération transversale ($a_{y,S}$) du véhicule produite par l'inclinaison transversale de la voie de roulement, le procédé comprenant les étapes suivantes :

mesurer (S10) d'une accélération transversale ($a_{y,mesure}$) du véhicule à l'aide d'un dispositif de mesure ;
déterminer (S20) une accélération transversale ($a_{y,manœuvre}$) du véhicule produite par des manœuvres de roulement à l'aide un observateur d'inclinaison transversale (10) ;
déterminer (S30) une accélération transversale ($a_{y,S}$) du véhicule produite par l'inclinaison de la voie de roulement, l'accélération transversale ($a_{y,S}$) du véhicule produite par l'inclinaison transversale de la voie de roulement correspondant à une différence entre l'accélération transversale ($a_{y,manœuvre}$) du véhicule produite par les manœuvres de roulement et l'accélération transversale ($a_{y,mesure}$) du véhicule mesurée par le dispositif de mesure,
régler (S40) un angle de braquage ($\delta_{comp,ay}$), qui compense l'accélération transversale de voie de roulement et qui compense l'accélération transversale ($a_{y,S}$) du véhicule produite par l'inclinaison transversale de la voie de roulement, à l'aide d'un compensateur d'inclinaison transversale (11) sur la base de l'accélération transversale ($a_{y,S}$) déterminée du véhicule produite par l'inclinaison transversale de la voie de roulement,
l'angle de braquage ($\delta_{comp,ay}$) du véhicule qui compense l'inclinaison de la voie de roulement étant déterminé à partir d'une corrélation de l'angle de braquage de compensation ($\delta_{comp,ay}$) du véhicule avec une constante ($k$) dépendant du véhicule et l'accélération transversale ($a_{y,S}$) du véhicule produite par l'inclinaison de la voie de roulement ; et
la constante ($k$) étant implémentée en fonction de la vitesse et de la charge et étant ainsi fonction de la vitesse ($v$) du véhicule et de la masse ($m$) du véhicule.

2. Procédé selon la revendication 1, **caractérisé en ce que** l'accélération latérale ($a_{y,manœuvre}$) du véhicule produite par les manœuvres de roulement est déterminée à partir d'une corrélation de l'accélération latérale ($a_{y,manœuvre}$)

produite par les manœuvres de roulement du véhicule avec un taux de lacet ($\Psi$) et une vitesse de roulement (v) du véhicule.

3. Dispositif de détection et de compensation d'une inclinaison transversale de la voie de roulement parcourue par un véhicule,

l'inclinaison transversale de la voie de roulement étant détectée sur la base d'une accélération transversale ($a_{y,S}$) du véhicule produite par l'inclinaison transversale de la voie de roulement, le dispositif comportant :

un dispositif de mesure qui est approprié pour mesurer une accélération transversale ($a_{y,mesure}$) du véhicule, et un observateur d'inclinaison transversale (10) qui est approprié pour déterminer une accélération latérale ($a_{y,manœuvre}$) du véhicule produite par des manœuvres de roulement,

l'observateur d'inclinaison transversale (10) étant approprié pour déterminer une accélération transversale ($a_{y,S}$) du véhicule produite par l'inclinaison transversale de la voie de roulement en déterminant une différence entre l'accélération transversale ($a_{y,manœuvre}$) du véhicule produite par les manœuvres de roulement et l'accélération transversale ($a_{y,mesure}$) du véhicule,

un compensateur d'inclinaison transversale (11) qui est approprié pour régler un angle de braquage ($\delta_{komp,ay}$) qui compense l'inclinaison transversale de la voie de roulement et qui compense une accélération transversale ($a_{y,S}$) du véhicule, produite par l'inclinaison transversale de la voie de roulement, sur la base de l'accélération transversale déterminée ($a_{y,S}$) du véhicule produite par l'inclinaison transversale de la voie de roulement,

le compensateur d'inclinaison transversale (11) étant approprié pour déterminer l'angle de braquage ($\delta_{komp,ay}$) du véhicule, qui compense l'inclinaison transversale de la voie de roulement, à partir d'une corrélation de l'angle de braquage de compensation ($\delta_{komp,ay}$) du véhicule avec une constante (k) dépendant du véhicule et l'accélération latérale ($a_{y,S}$) du véhicule produite par l'inclinaison transversale de la voie de roulement ; et

la constante (k) étant implémentée en fonction de la vitesse et de la charge et étant ainsi fonction de la vitesse (v) du véhicule et de la masse (m) du véhicule.

4. Dispositif selon la revendication 3, **caractérisé en ce que** l'observateur d'inclinaison transversale (10) est approprié pour déterminer l'accélération transversale ($a_{y,manœuvre}$) du véhicule, produite par des manœuvres de roulement, à partir d'une corrélation de l'accélération transversale ($a_{y,manœuvre}$) du véhicule, produite par des manœuvres de roulement, avec un taux de lacet ($\Psi$) et une vitesse de roulement (v) du véhicule.

S10: Messen einer Querbeschleunigung $a_{y,Messung}$ des Fahrzeugs durch eine Messvorrichtung

S20:Bestimmen einer durch Fahrmanöver erzeugten Querbeschleunigung $a_{y,Manöver}$ des Fahrzeugs durch einen Querneigungsbeobachter

S30: Bestimmen einer durch die Fahrbahnquerneigung aufgebrachten Querbeschleunigung $a_{y,S}$ des Fahrzeugs, durch eine Differenz der durch Fahrmanöver erzeugten Querbeschleunigung $a_{y,Manöver}$ des Fahrzeugs und der durch die Messvorrichtung gemessenen Querbeschleunigung $a_{y,Messung}$ des Fahrzeugs.

S40: Stellen eines Lenkwinkels $\delta_{komp,ay}$, welcher eine durch die Fahrbahnquerneigung aufgebrachte Querbeschleunigung $a_{y,S}$ des Fahrzeugs kompensiert, durch einen Querneigungskompensator auf der Grundlage der durch das Verfahren zum Bestimmen der von dem Fahrzeug durchfahrenen Fahrbahnquerneigung bestimmten, durch die Fahrbahnquerneigung aufgebrachten Querbeschleunigung $a_{y,S}$ des Fahrzeugs.

Fig.1

Fig. 2

EP 2 407 364 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19821618
- DE 19615311 A1
- DE 19821617 C1
- DE 102006053102 A1